# FASCICULE DE BREVET EUROPEEN

(11) **EP 1 202 470 B1**
(45) Date de publication et mention de la délivrance du brevet: **18.07.2007**
(21) Numéro de dépôt: 00123332.9
(22) Date de dépôt: 27.10.2000
(51) Int. Cl.: H04B 7/005, H03G 3/30

(54) **Procédé et dispositif de contrôle de la puissance d'émission d'un téléphone mobile cellulaire**
Verfahren und Vorrichtung zur Leistungsregelung eines Mobilfunktelefons
Method and Circuit for power control in a mobile telephone

(43) Date de publication de la demande: 02.05.2002
(73) Titulaire: STMicroelectronics N.V., 1077 XX Amsterdam (NL)
(72) Inventeur: Conti, Patrick, 1212 Grand-Lancy (CH); Berens, Friedbert, 1202 Genève (CH)
(74) Mandataire: Casalonga, Axel

(56) Documents cités:
- EP-A- 0 883 250
- PATENT ABSTRACTS OF JAPAN vol. 1998, no. 13, 30 novembre 1998 (1998-11-30) & JP 10 224530 A (MINOLTA CO LTD), 21 août 1998 (1998-08-21)

## Description

L'invention concerne d'une façon générale les systèmes de communication sans fil; et plus particulièrement les systèmes CDMA (Système à accès multiples par division de code; "Code Division Multiple Access" en langue anglaise) tels que les différents systèmes de téléphone mobile basés sur le système CDMA, comme le système CDMA 2000, le système WCDMA ("Wide Band CDMA" en langue anglaise; CDMA large bande) ou la norme IS-95.

Dans un système de communication sans fil, une station de base communique avec une pluralité de terminaux distants, tels que des téléphones mobiles cellulaires. Les accès multiples par division de fréquence (FDMA : "Fréquency-Division Multiple Access" en langue anglaise) et les accès multiples par division temporelle (TDMA : "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

A l'opposé de ces schémas utilisant une division de fréquence ou une division temporelle, les schémas CDMA permettent aux utilisateurs multiples de partager une fréquence commune et un canal temporel commun en utilisant une modulation codée.

Plus précisément, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination de "Code OVSF", est alloué à chaque terminal distant (comme par exemple un téléphone mobile cellulaire). Tous les codes OVSF sont orthogonaux entre eux, ce qui permet de distinguer un terminal distant d'un autre.

Avant d'émettre un signal sur le canal de transmission à destination d'un terminal distant, le signal a été embrouillé et étalé ("spreaded " en langue anglaise) par la station de base en utilisant le code d'embrouillage de la station de base et le code OVSF du terminal distant.

Dans les systèmes CDMA, on peut encore distinguer ceux qui utilisent une fréquence distincte pour l'émission et la réception (système CDMA-FDD) et ceux qui utilisent une fréquence commune pour l'émission et la réception, mais des domaines temporels distincts pour l'émission et la réception (système CDMA-TDD).

L'invention s'applique avantageusement aux systèmes de communication du type CDMA, et plus particulièrement aux systèmes du type CDMA-FDD.

Dans les terminaux distants, tels que les téléphones mobiles cellulaires, il est actuellement prévu un seul amplificateur de puissance pour l'émission, cet amplificateur de puissance ayant une large plage de fonctionnement de puissance radiofréquence. Et, notamment dans les systèmes CDMA-FDD, l'amplificateur de puissance est continuellement en fonctionnement pendant les communications.

Par ailleurs, la puissance d'émission délivrée par l'amplificateur de puissance, peut varier dans une plage de puissances prédéterminée, typiquement de -50 dBm à 24 dBm pour les téléphones mobiles de troisième génération. Dans cette plage de puissance, la puissance d'émission est ajustée en fonction d'informations de puissance régulièrement reçues par le téléphone et en provenance de la station de base.

Actuellement, l'amplificateur de puissance est conçu de façon à présenter l'efficacité la plus grande pour la puissance d'émission maximale. Par contre, pour les puissances intermédiaires ou basses, il se produit une détérioration significative de l'efficacité puisque le courant de repos de l'amplificateur de puissance ne change pas, tandis que la puissance émise décroît. Ainsi, dans ces modes de fonctionnement à puissance faible ou intermédiaire, l'efficacité, c'est-à-dire le rendement, décroît de façon drastique jusqu'à une valeur de l'ordre de quelques pourcents (1 à 5% par exemple).

Il en résulte alors une perte d'énergie au niveau de la batterie, ce qui diminue sa durée de vie.

Le document EP-A-0 883 250 montre un appareil qui active un ou plusieurs amplificateurs d'une façon sélective. Un circuit de contrôle est connecté aux amplificateurs et aux circuits de commutation.

L'invention vise à apporter une solution au problème mentionné auparavant.

Un but de l'invention est de contrôler la puissance d'émission d'un terminal distant, en particulier un téléphone mobile cellulaire, de façon à optimiser son efficacité sans affecter la qualité du service transmis.

L'invention propose donc un procédé de contrôle de la puissance d'émission d'un téléphone mobile cellulaire dans une plage de puissances prédéterminée, procédé dans lequel on ajuste la puissance d'émission en fonction d'informations de puissance régulièrement reçues par le téléphone.

Selon une caractéristique générale de l'invention, on équipe le téléphone avec au moins deux amplificateurs de puissance individuellement sélectionnables et capables de couvrir ensemble la totalité de la plage de puissance. Ces deux amplificateurs possèdent respectivement deux zones de fonctionnement optimal différentes et une zone commune de fonctionnement.

On associe l'un des amplificateurs à chaque point de la plage de puissance en fonction d'un critère d'efficacité. Ainsi, en pratique, on pourra associer à chaque point de la plage de puissance l'amplificateur dont le rendement est le plus élevé pour ce point.

En présence d'une information de puissance reçue correspondant à un point de la zone commune, on vérifie si cette information de puissance correspond à l'amplificateur actuellement sélectionné. Si tel est le cas, on continue à utiliser cet amplificateur pour la délivrance de la puissance d'émission.

Dans le cas contraire, on définit une plage temporelle de commutation s'étendant depuis l'instant de réception de ladite information de puissance sur une durée prédéterminée compatible avec les limites de ladite zone commune. On définit également en fonction d'un critère prédéterminé d'interruption d'émission, les limites temporelles d'une plage temporelle d'interruption se situant dans ladite plage de commutation.

On continue, éventuellement à partir de nouvelles informations de puissance reçues, à ajuster la puissance d'émission avec l'amplificateur actuellement sélectionné jusqu'à l'occurence de ladite plage d'interruption. Puis, si la dernière information de puissance reçue avant l'occurence de ladite plage d'interruption, ne correspond toujours pas à l'amplificateur actuellement sélectionné, on inhibe l'émission pendant ladite plage d'interruption, on sélectionne l'amplificateur de puissance associé à ladite dernière information de puissance, et on réactive l'émission avec le nouvel amplificateur sélectionné.

En d'autres termes, lorsque la puissance d'émission requise par la station de base atteint une limite pour l'amplificateur de puissance actuellement sélectionné, cet amplificateur de puissance doit être commuté. Mais, puisque cet amplificateur de puissance (qui doit être désélectionné) et le nouvel amplificateur de puissance (qui doit être sélectionné, et dont les caractéristiques permettront d'obtenir une meilleure efficacité pour la puissance requise) possèdent une zone de fonctionnement commune, le point de commutation peut être choisi de façon flexible dans une plage temporelle (plage de commutation) correspondant aux limites de la zone de fonctionnement commune. Et, à l'intérieur de cette plage de commutation, l'invention prévoit de choisir l'instant de commutation qui va occasionner une perturbation minimale dans la transmission.

Généralement, les informations émises sont formées de "fragments" ("chips" en langue anglaise) et sont véhiculées au sein de trames successives subdivisées chacune en un nombre prédéterminé d'intervalles ("slots" en langue anglaise). La durée de la plage de commutation est alors avantageusement de l'ordre de quelques intervalles, par exemple quatre à huit intervalles. De même, la durée de la plage temporelle d'interruption est avantageusement de l'ordre de quelques fragments, par exemple deux à quatre fragments.

Selon un mode particulier de mise en oeuvre de l'invention, le critère d'interruption d'émission comporte le choix d'au moins un événement particulier prédéterminé pouvant se produire au cours d'une émission et ayant un impact prédéterminé sur le taux d'erreur binaire (BER : "Binary Error Rate" en langue anglaise) en cas d'interruption d'émission lors de l'occurence de cet événement particulier. On analyse alors les caractéristiques de l'émission de façon à détecter la présence éventuelle de cet événement particulier prédéterminé à l'intérieur de la plage de commutation. Et, si cette présence est effective, on place ladite plage temporelle d'interruption lors de l'occurence de cet évènement particulier.

Ainsi, l'interruption de l'émission pour permettre la commutation des amplificateurs aura l'impact prédéterminé souhaité sur l'émission, en pratique un impact négligeable.

Il est particulièrement avantageux que le critère d'interruption d'émission comporte le choix d'un groupe de plusieurs événements particuliers prédéterminés pouvant se produire au cours d'une émission, et l'ordonnancement de ces évènements particuliers selon un ordre de priorité prédéterminé en fonction de leurs impacts respectifs sur le taux d'erreur binaire en cas d'interruption d'émission lors de l'occurence de ces événements particuliers.

Ainsi, par exemple, l'évènement particulier ayant la priorité la plus élevée correspondra à celui pour lequel l'impact sur le taux d'erreur binaire sera le plus faible si l'interruption de l'émission se produit lors de l'occurence de cet événement particulier.

L'événement particulier qui sera alors affecté de la priorité la plus faible correspondra à celui dont l'impact sur le taux d'erreur binaire sera le plus élevé, si l'interruption de l'émission se produit au cours de cet événement particulier.

On analyse alors avantageusement les caractéristiques de l'émission en considérant ledit ordre de priorité, de façon à détecter la présence éventuelle pendant ladite plage de commutation d'un événement particulier prédéterminé dudit groupe. Et, on place ladite plage temporelle d'interruption lors de l'occurence du premier événement particulier ainsi détecté dans l'ordre de priorité.

En d'autres termes, si on détecte la présence de l'événement particulier ayant la priorité la plus élevée, c'est au cours de l'occurence de cet évènement que l'on placera ladite plage d'interruption. Par contre, si l'on ne détecte pas un événement particulier affecté de la priorité la plus élevée, on cherchera alors à détecter un événement ayant une priorité plus faible, et ainsi de suite. Et, dès que l'on détecte un évènement particulier, on place la plage d'interruption lors de l'occurence de cet événement particulier.

Ainsi, lorsque les informations émises comportent des données et des indications de contrôle, et sont véhiculées au sein de trames successives subdivisées chacune en un nombre prédéterminé d'intervalles, les indications de contrôle comportant des informations en retour (FBI : "Feedback Information") et des indicateurs de combinaison de format de transport (TFCI : "Transport Format Combination Indicator"), le groupe d'événements particuliers est alors constitué, par exemple, par ordre de priorité décroissant :
- des intervalles vides lors d'un mode d'émission comprimé (cet événement particulier étant alors affecté de la priorité la plus élevée),
- des intervalles au cours desquels l'émission doit être interrompue dans un mode d'émission dit "hâché" ("gated mode" en langue anglaise),
- des parties des intervalles de silence dans un mode de transmission discontinu, au cours desquelles on n'émet ni informations en retour (FBI), ni indicateurs de combinaison de format de transport (TFCI),
- des parties des intervalles au cours desquelles on émet des données ayant un facteur d'étalement ("spreading factor" en langue anglaise) élevé, par exemple 128 ou 256, mais au cours desquelles on n'émet ni informations en retour (FBI), ni indicateurs de combinaison de format de transport (TFCI),
- des parties des intervalles au cours desquelles on émet des données ayant un facteur d'étalement faible, c'est-à-dire inférieur ou égal à 64, mais sans émettre ni informations en retour (FBI), ni indicateurs de combinaison de format de transport (TFCI),
- des parties des intervalles au cours desquelles on émet des informations en retour (FBI) ou des indicateurs de combinaison de format de transport (TFCI).

Ce dernier évènement est celui qui a la priorité la plus faible et qui a par conséquent l'impact le plus élevé sur le taux d'erreur binaire. Mais, à défaut d'avoir trouvé un évènement particulier ayant une priorité plus élevée dans la liste qui vient d'être évoquée, on choisira néanmoins de commuter l'amplificateur au cours de la transmission des informations de contrôle FBI ou TFCI, plutôt que de risquer de perdre la transmission.

L'invention a également pour objet un téléphone mobile cellulaire, comprenant une chaîne de réception, une chaîne d'émission, un étage d'amplification de puissance connecté entre la chaîne d'émission et l'antenne, et un étage de traitement apte à ajuster la puissance de sortie de l'étage d'amplification en fonction d'informations de puissance régulièrement reçues par la chaîne de réception.

Selon une caractéristique générale de l'invention, l'étage d'amplification de puissance comporte :
- au moins deux amplificateurs de puissance individuellement sélectionnables, capables de couvrir ensemble la totalité de la plage de puissances, possédant respectivement deux zones de fonctionnement optimal différentes et une zone commune de fonctionnement,
- des moyens de sélection aptes en réponse à une information de sélection, à relier la sortie de la chaîne d'émission à l'entrée de l'amplificateur de puissance correspondant à ladite information de sélection.

Par ailleurs, l'étage de traitement comporte :
- une table de correspondance (mémoire par exemple) associant l'un des amplificateurs à chaque point de la plage de puissances en fonction d'un critère d'efficacité,
- des moyens de contrôle aptes en présence d'une information de puissance reçue correspondant à un point de la zone commune, à vérifier si cette information de puissance correspond à l'amplificateur actuellement sélectionné, et dans le cas contraire à définir une plage temporelle de commutation s'étendant depuis l'instant de réception de ladite information de puissance sur une durée prédéterminée compatible avec les limites de ladite zone commune, et à définir en fonction d'un critère prédéterminé d'interruption d'émission, les limites temporelles d'une plage temporelle d'interruption se situant dans ladite plage de commutation, et
- des moyens de commande aptes à autoriser la poursuite, éventuellement à partir de nouvelles informations de puissance reçues, de l'ajustement de la puissance d'émission avec l'amplificateur actuellement sélectionné jusqu'à l'occurence de ladite plage d'interruption, puis, si la dernière information de puissance reçue avant l'occurence de ladite plage d'interruption ne correspond toujours pas à l'amplificateur actuellement sélectionné, à inhiber l'émission pendant ladite plage d'interruption, à délivrer aux moyens de sélection l'information de sélection correspondant à l'amplificateur de puissance associé à la dernière information de puissance, et à réactiver l'émission avec le nouvel amplificateur sélectionné.

D'autres avantages et caractéristiques de l'invention apparaîtront à l'examen de la description détaillée de modes de mise en oeuvre et de réalisation, nullement limitatifs, et des dessins annexés, sur lesquels :
- la figure 1 illustre de façon schématique l'architecture d'un téléphone mobile cellulaire selon l'invention, et plus particulièrement, la chaîne d'émission et l'étage amplificateur de puissance;
- la figure 2 illustre toujours schématiquement, plus particulièrement, la partie réception d'un téléphone mobile cellulaire selon l'invention;
- la figure 3 illustre schématiquement deux courbes d'efficacité associées à deux amplificateurs de puissance équipant l'étage d'amplification de puissance d'un téléphone mobile selon l'invention;
- la figure 4 illustre plus en détail, mais toujours schématiquement, la structure interne d'un étage de traitement numérique d'émission d'un téléphone mobile cellulaire selon l'invention;
- la figure 5 illustre schématiquement une structure de trame temporelle de réception émise par une station de base à destination d'un téléphone mobile cellulaire;
- la figure 6 illustre schématiquement une trame d'émission émise par un téléphone mobile cellulaire à destination d'une station de base, dans un mode normal d'émission;
- la figure 7 illustre schématiquement et partiellement une structure d'une trame d'émission dans un mode d'émission comprimé;
- la figure 8 illustre toujours schématiquement et partiellement une structure d'une trame d'émission dans un mode de transmission discontinu;
- la figure 9 illustre schématiquement un organigramme d'un mode de mise en oeuvre du procédé selon l'invention, permettant la commutation à un instant choisi d'un amplificateur de puissance; et
- la figure 10 est un chronogramme temporel schématique correspondant à un mode de mise en oeuvre du procédé selon l'invention.

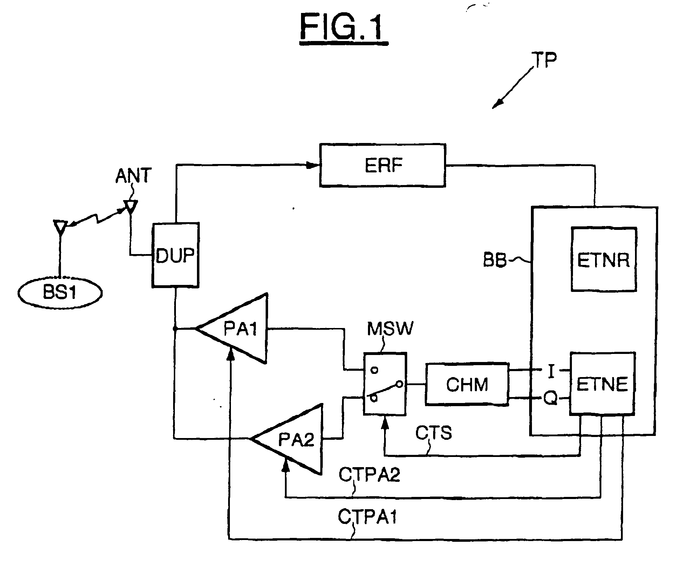

Sur la figure 1, la référence TP désigne un terminal distant, tel qu'un téléphone mobile cellulaire, qui est en communication avec une station de base BS1, par exemple selon un schéma de communication du type CDMA-FDD.

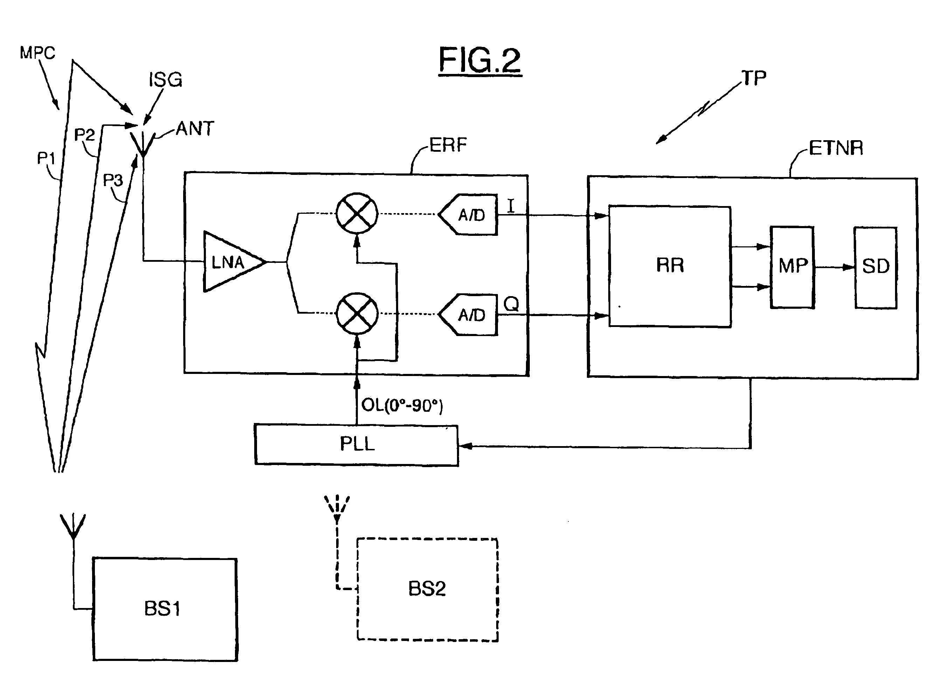

Le téléphone mobile cellulaire comprend, de façon classique, un étage analogique radiofréquence ERF connecté à une antenne ANT par l'intermédiaire d'un duplexeur DUP, pour recevoir un signal d'entrée ISG (figure 2).

Classiquement, l'étage ERF comprend (figure 2) un amplificateur faible bruit LNA et deux voies de traitement comportant des mélangeurs, des filtres et amplificateurs classiques (non représentés sur la figure 2 à des fins de simplification). Les deux mélangeurs reçoivent respectivement de la part d'une boucle à verrouillage de phase PLL deux signaux présentant mutuellement une différence de phase de 90°. Après transposition de fréquence dans les mélangeurs, les deux voies de traitement définissent respectivement deux flux I (flux direct) et Q (flux en quadrature) selon une dénomination bien connue de l'homme du métier.

Après conversion numérique dans des convertisseurs analogiques/numériques, les deux flux I et Q sont délivrés à un étage de traitement de réception ETNR.

Cet étage de traitement ETNR comprend, de façon classique, un récepteur RR, communément désigné par l'homme du métier "récepteur Rake", suivi par des moyens classiques de démodulation MP qui effectuent la démodulation de la constellation délivrée par le récepteur Rake RR.

En raison des réflexions possibles du signal initialement transmis, sur des obstacles se situant entre la station de base et le téléphone mobile, le milieu de transmission est en fait un milieu de transmission multi-trajets MPC, c'est-à-dire comprenant plusieurs chemins de transmission différents (trois chemins de transmission P1, P2, P3 sont représentés sur la figure 2). En conséquence, le signal ISG qui est reçu par le téléphone mobile comporte différentes versions temporellement retardées du signal initialement transmis, versions qui sont le résultat des caractéristiques de transmission multi-trajets du milieu de transmission. Et, chaque trajet introduit un retard différent.

Le récepteur Rake RR, qui équipe un téléphone mobile cellulaire fonctionnant dans un système de communication CDMA, est utilisé pour effectuer l'alignement temporel, le désembrouillage, le désétalement et la combinaison des versions retardées des signaux initiaux, de façon à délivrer les flux d'informations contenus dans les signaux initiaux. Bien entendu, le signal reçu ISG pourrait également résulter de la transmission de signaux initiaux respectivement émis par différentes stations de base BS 1 et BS2.

L'étage de traitement ETNR comprend également de façon classique un décodeur de source SD qui effectue un décodage de source bien connu par l'homme du métier.

Enfin, comme il est également bien connu par l'homme du métier, la boucle à verrouillage de phase PLL est commandée par un algorithme de contrôle automatique de fréquence incorporé dans un processeur de l'étage ETNR.

Ainsi qu'il est bien connu de l'homme du métier, avant transmission via l'antenne de la station de base BS1, le signal initial contenant les informations (symboles) est embrouillé ("scrambled" en langue anglaise) et étalé ("spreaded") par des moyens de traitement de la station de base, en utilisant le code d'embrouillage ("scrambling code") de la station de base et le code orthogonal (code OVSF) du téléphone TP.

En conséquence, les symboles sont transformés en fragments ("chips" en langue anglaise) ayant une longueur prédéterminée (par exemple égale à 260 ns), et correspondant à un taux de fragments prédéterminé (chip rate) égal par exemple à 3,84 Mcps. Ainsi, le taux de fragments (chip rate) est plus grand que le taux de symboles (symbol rate). Ainsi, un symbole peut être transformé en un nombre de fragments pouvant aller de 4 à 256.

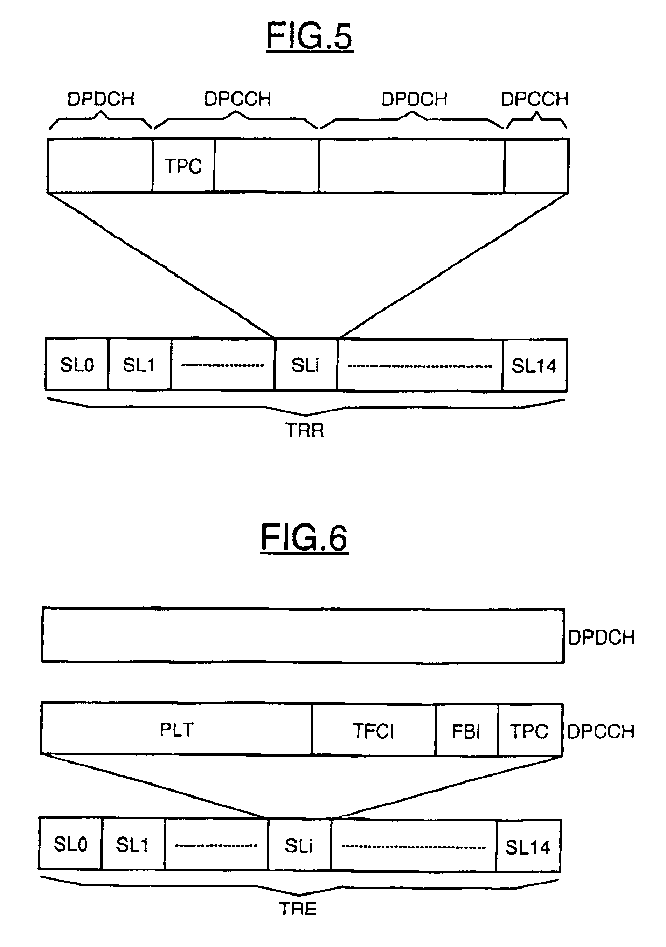

Comme illustré sur la figure 5, les informations émises par la station de base et formées de fragments, sont véhiculées au sein de trames successives TRR subdivisées chacune en un nombre prédéterminé d'intervalles ("slots" en langue anglaise) SLi. A titre indicatif, chaque trame TRR, ayant une longueur de 10 ms, est subdivisée en quinze intervalles SL0-SL14, chaque intervalle ayant une longueur égale à 2560 fragments.

Les informations reçues par le téléphone et émanant de la station de base, comportent des données proprement dites véhiculées sur un canal de données DPDCH, et des indications de contrôle véhiculées sur un canal de contrôle DPCCH. Dans le sens descendant ("downlink" en langue anglaise), chaque intervalle temporel SLi de la trame TRR contient de façon imbriquée (figure 5) des données et des indication de contrôle. Ceci est parfaitement connu de l'homme du métier. Néanmoins, celui-ci pourra se référer pour plus de détails à la spécification technique 3G TS 25.211, V. 3.2.0 (Mars 2000), éditée par l'organisme 3GPP, 650 Route des Lucioles - Sophia Antipolis-Valbonne-France, et intitulée "3rd Generation Partnership Project; Technical Specification Group Radio Access Network; Physical channels and mapping of transport channels onto physical channels (FDD), (Release 1999).

Parmi ces indications de contrôle, figure un mot TPC ("Transmit power control" en langue anglaise; commande de la puissance de transmission) qui constitue en fait une information de puissance requise par le réseau et permettant au téléphone mobile TP d'ajuster la puissance d'émission de l'étage amplificateur de puissance, pour se conformer à cette information de puissance, comme on va maintenant le décrire plus en détail.

A cet égard, si l'on se réfère de nouveau plus particulièrement à la figure 1, on voit que le bloc de traitement en bande de base BB, comporte, outre l'étage de traitement ETNR, un étage de traitement d'émission ETNE qui effectue, de façon classique, notamment les traitements de codage de source, d'étalement des symboles, de modulation, pour délivrer les deux flux I et Q à une chaîne d'émission CHM de structure classique.

Cette chaîne d'émission CHM comporte notamment, en tête des convertisseurs numériques/analogiques, ainsi que des mélangeurs permettant d'effectuer une transposition de fréquence à la fréquence d'émission. Là encore, les signaux de transposition sont délivrés par une boucle à verrouillage de phase (non représentée ici à des fins de simplification) contrôlée également par des moyens de contrôle automatique de fréquence incorporés dans l'étage ETNE.

L'étage d'amplification de puissance du téléphone mobile TP comporte ici deux amplificateurs de puissance PA1 et PA2, de structure classique et connue en soi, dont les entrées respectives sont reliées aux sorties de moyens de sélection MSW formées ici par un duplexeur contrôlé par un signal de sélection CTS élaboré et délivré par l'étage de traitement ETNE. L'entrée du duplexeur MSW est reliée à la sortie de la chaîne d'émission CHM. Les sorties respectives des deux amplificateurs P1 et PA2 sont reliées à l'antenne ANT par l'intermédiaire du duplexeur DUP.

Enfin, chaque amplificateur PA1, PA2 est commandé par un signal de commande CTPA1, CTPA2 permettant d'inhiber son fonctionnement. Ces deux signaux CTPA1 et CTPA2 sont également délivrés par l'étage de traitement ETNE.

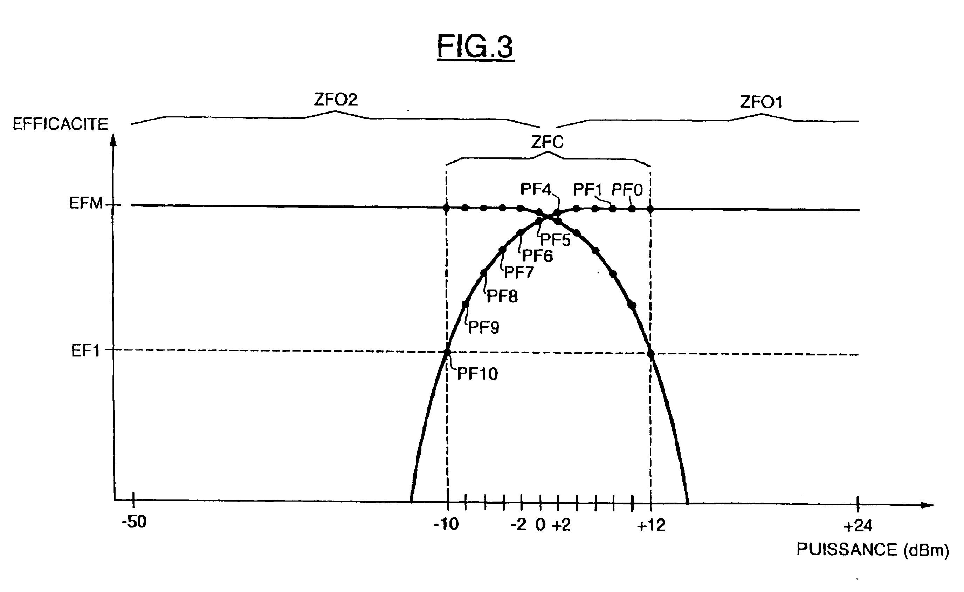

Comme illustré sur la figure 3, chaque amplificateur de puissance possède une zone de fonctionnement optimal et une zone de fonctionnement commune avec l'autre amplificateur de puissance.

Ainsi, à titre d'exemple, l'amplificateur PA1 présente une zone de fonctionnement optimal ZFO1, c'est-à-dire une zone pour laquelle l'efficacité (rendement) de l'amplificateur a une valeur maximale EFM, par exemple dans une zone de puissance comprise entre +2 dBm et +24 dBm. Puis, l'efficacité de l'amplificateur PA1 décroît ensuite pour des puissances inférieures à +2 dBm. Pour une puissance de -10 dBm (point de fonctionnement PF9), l'efficacité de l'amplificateur PA1 est égale à EF1 qui est une valeur d'efficacité choisie par exemple inférieure de 3 dB à la valeur maximale EFM.

De même, la zone de fonctionnement optimale ZFO2 de l'amplificateur PA2 s'étend de -50 dBm jusqu'à environ -2dBm. L'efficacité de l'amplificateur PA2 décroît ensuite pour atteindre la valeur EF1 à + 12 dBm.

Les deux amplificateurs de puissance couvrent donc ensemble la totalité de la plage de puissance, allant de -50 dBm à +24 dBm.

Ils possèdent par ailleurs une zone de fonctionnement commune ZFC dont on a fixé ici les limites à -10 dBm et +12 dBm.

Les limites de cette zone de fonctionnement commune ont été définies de façon à ce que l'amplificateur qui présente une efficacité moindre dans cette zone, ait tout de même une efficacité acceptable.

Chaque point de la plage de puissances est associé à l'un des amplificateurs en fonction d'un critère d'efficacité. Ainsi, tous les points de fonctionnement compris entre -10 dBm et -50 dBm sont associés à l'amplificateur PA2. De même, tous les points de fonctionnement compris entre +12 dBm et +24 dBm sont associés à l'amplificateur PA1.

Dans la zone de fonctionnement commune, tous les points de fonctionnement compris entre -10 dBm et 0 dBm sont associés à l'amplificateur PA2, car c'est celui qui présente l'efficacité la plus grande pour ces points de fonctionnement. De même, tous les points de fonctionnement compris entre +2 dBm et +12 dBm sont associés à l'amplificateur PA1 qui présente dans cette zone l'efficacité la plus grande.

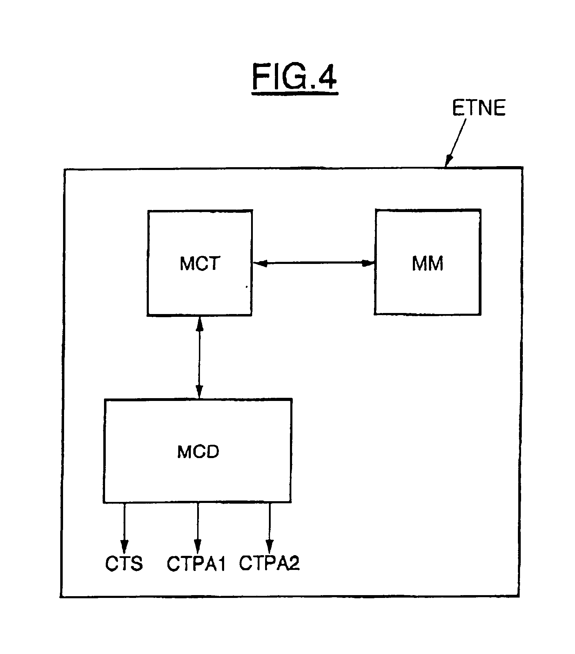

Cette table de correspondance entre un point de fonctionnement et un amplificateur de puissance est stockée dans une mémoire MM de l'étage ETNE (figure 4).

Outre les moyens qui ont été déjà évoqués plus haut, l'étage ETNE comporte par ailleurs des moyens de contrôle MCT et des moyens de commande MCD. Ces moyens sont par exemple réalisés de façon logicielle au sein d'un microprocesseur.

Les informations de puissance TPC (figure 5) sont reçues au sein de chaque intervalle temporel SLi, et la variation de puissance entre deux informations de puissance successives est par exemple de 2 dBm. Tant que l'information de puissance TPC reçue par l'étage de traitement ETNE se situe dans la zone de fonctionnement optimale de l'amplificateur PA1 (que l'on suppose ici sélectionné) et à l'extérieur de la zone de fonctionnement commune ZFC, il n'est nul besoin de changer d'amplificatcur de puissance et la puissance d'émission peut continuer à être ajustée avec les informations TPC en utilisant l'amplificateur PA1 sélectionné.

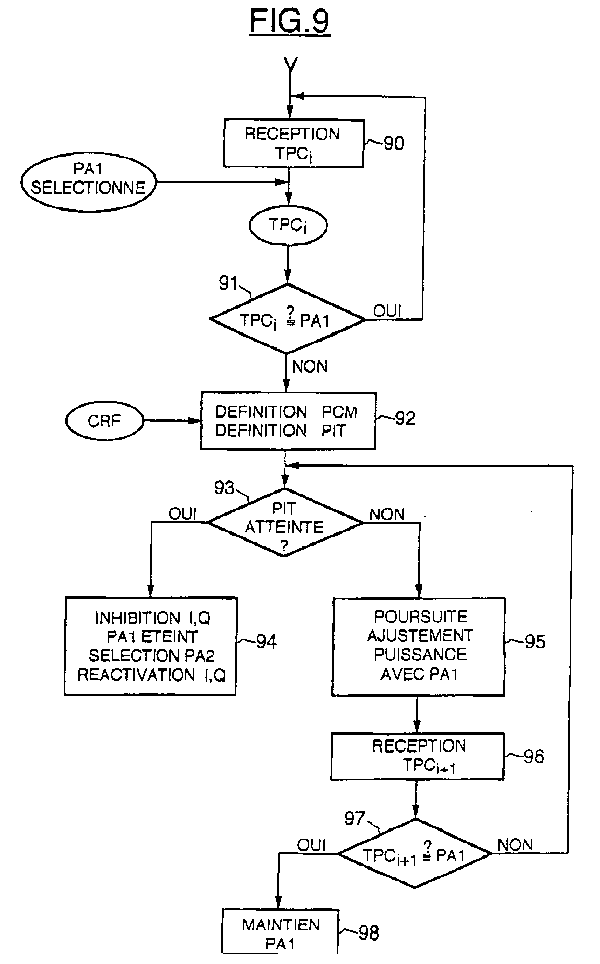

Lorsque la puissance demandée par le réseau décroît et correspond à un point de fonctionnement situé dans la zone de fonctionnement commune ZFC, les moyens de contrôle vont, d'une façon générale, vérifier si cette information de puissance TPCᵢ reçue (étape 90, figure 9) correspond à l'amplificateur actuellement sélectionné (étape 91), c'est-à-dire à l'amplificateur PA1. Si tel est le cas, il n'y a pas de modification de sélection de l'amplificateur de puissance. C'est le cas par exemple pour les points de fonctionnement PF0 à PF4.

Par contre, si une information de puissance TPCᵢ reçue dans l'étape 90 (figure 9) correspond au point de fonctionnement PF5, il convient alors de commuter l'amplificateur de puissance et de sélectionner l'amplificateur PA2.

A cet égard, les moyens de contrôle MCT vont alors définir une plage temporelle de commutation PCM (étape 92) s'étendant depuis l'instant de réception de ladite information de puissance TPCᵢ (correspondant au point de fonctionnement PF5), sur une durée prédéterminée compatible avec les limites de ladite zone commune ZFC.

Les moyens de contrôle MCT vont également définir en fonction d'un critère prédéterminé d'interruption d'émission CRF, dont on reviendra plus en détail ci-après sur le contenu, les limites temporelles d'une plage temporelle d'interruption PIT se situant dans ladite plage de commutation PCM.

En d'autres termes, les moyens de contrôle vont définir, à partir du point PF5, une plage de commutation à l'intérieur de laquelle il sera possible de changer d'amplificateur de puissance tout en continuant, avant ce point de commutation, d'ajuster la puissance d'émission en utilisant l'amplificateur actuellement sélectionné, c'est-à-dire l'amplificateur PA1, bien que celui-ci présente une efficacité moindre que celle de l'amplificateur PA2. La limite de la plage de commutation sera par exemple ici celle définie par le point PF9. En effet, entre les points PF5 et PF9, l'efficacité de l'amplificateur PA1 reste acceptable, alors qu'au-delà du point PF9 elle est jugée trop faible. En terme d'intervalles ("slots"), la durée de la plage de commutation correspond ici à quatre intervalles.

Bien entendu, l'homme du métier pourra ajuster la longueur de la plage de commutation en fonction des diverses courbes d'efficacité des amplificateurs dans la zone de fonctionnement commune. D'une façon générale, on pourra choisir une plage de commutation comprise entre environ quatre intervalles et huit intervalles.

Une fois cette plage de commutation PCM délimitée, les moyens de contrôle vont définir en fonction du critère d'interruption de transmission, la plage temporelle d'interruption PIT qui va correspondre aux meilleurs moments pour changer d'amplificateur, ce changement nécessitant au préalable un arrêt de l'émission du téléphone.

Revenons maintenant plus particulièrement à la figure 9 pour la poursuite de l'algorithme de commutation.

Les moyens de commande vont détecter dans l'étape 93 l'occurence de la plage d'interruption PIT. Tant que cette plage d'interruption n'est pas atteinte, les moyens de contrôle vont autoriser la poursuite (étape 95) de l'ajustement de la puissance d'émission avec l'amplificateur actuellement sélectionné, c'est-à-dire ici l'amplificateur PA1, et ce éventuellement à partir de nouvelles informations de puissance TPC reçues. Ainsi, si à titre d'exemple, la plage temporelle d'interruption PIT doit se produire à un instant correspondant à un point de fonctionnement situé entre les points PF7 et PF8, la puissance d'émission va continuer à être ajustée jusqu'à l'occurence de cette plage d'interruption PIT en utilisant les informations TPC correspondant aux points PF6 et PF7 (étapes 96 et 97).

Ceci étant, il convient de noter qu'à chaque réception d'une nouvelle information de puissance TPCᵢ₊₁, les moyens de commande vérifient si la nouvelle information de puissance reçue correspond à l'amplificateur actuellement sélectionné, c'est-à-dire l'amplificateur PA1 (étape 97). Si tel était le cas (par exemple si l'information de puissance reçue immédiatement après celle associée au point PF5 correspond au point de fonctionnement PF4), il n'y a plus lieu de changer d'amplificateur de puissance et l'amplificateur de puissance actuellement sélectionné PA1 est maintenu sélectionné (étape 98).

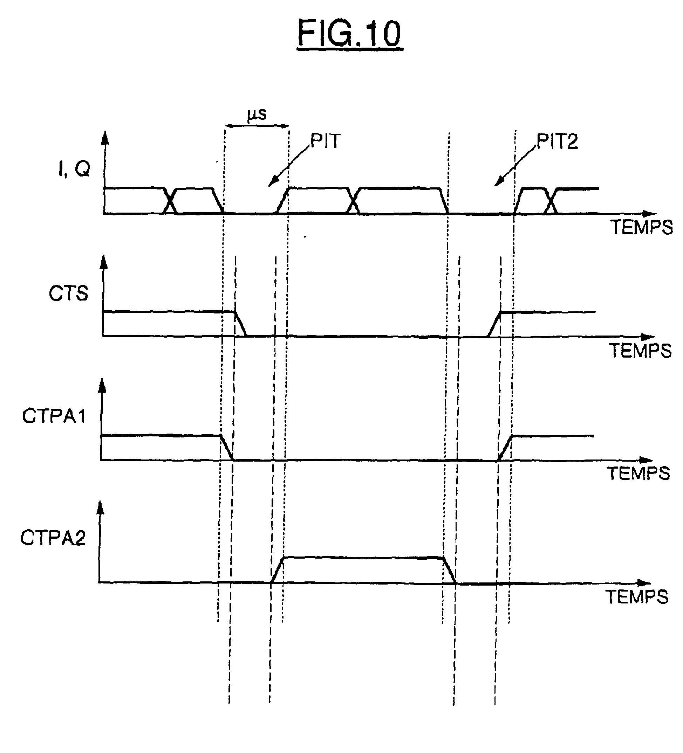

Lorsque les moyens de commande détectent l'occurence de la plage temporelle d'interruption, ils initient alors le processus de commutation (étape 94) illustré sur la figure 10.

D'une façon générale, comme illustré sur cette figure 10, les moyens de commande vont inhiber l'émission (I, Q) pendant toute la durée de la plage d'interruption PIT. Puis, ils vont délivrer aux moyens de sélection MSW, l'information de sélection CTS correspondant à l'amplificateur de puissance associé à la dernière information de puissance reçue, puis ils vont réactiver l'émission avec le nouvel amplificateur sélectionné.

Bien que différents modes de commutation peuvent être envisagés pour commuter les deux amplificateurs de puissance, celui décrit en référence à la figure 10 permet de minimiser les perturbations et évite notamment que les deux amplificateurs soient pendant un court instant tous deux opérationnels. Ainsi, le signal de commande CTPA1 de l'amplificateur PA1 est mis tout d'abord à 0 (amplificateur PA1 désactivé) une fois que l'émission a été inhibée. Puis, le signal de sélection CTS est délivré aux moyens de sélection MSW, qui relient alors la sortie de la chaîne d'émission CHM à l'entrée de l'amplificateur PA2.

Puis, le signal de commande CTPA2 est mis à 1, activant ainsi le fonctionnement de l'amplificateur PA2. Puis, lorsque cet amplificateur PA2 est activé, les moyens de commande réactivent l'émission I, Q.

Ce chronogramme temporel se reproduit éventuellement ultérieurement au cours d'une autre plage temporelle d'interruption PIT2 dans le cas où il conviendrait de recommuter sur l'amplificateur PA1.

La durée de la plage temporelle d'interruption PIT est également choisie de façon à minimiser les risques de perturbations de la transmission tout en autorisant une commutation efficace et nette des amplificateurs. A titre d'exemple, on pourra choisir une durée de l'ordre de quelques fragments ("chips"), par exemple deux à quatre fragments, ce qui correspond à une durée pouvant aller jusqu'à une microseconde environ.

On va maintenant revenir plus en détail sur l'élaboration du critère prédéterminé d'interruption d'émission CRF.

D'une façon générale, le critère d'interruption d'émission CRF comporte le choix d'au moins un événement particulier prédéterminé pouvant se produire au cours d'une émission et ayant un impact prédéterminé sur le taux d'erreur binaire en cas d'interruption d'émission lors de l'occurence de cet événement particulier. On choisira ainsi de préférence un évènement particulier minimisant le taux d'erreur binaire en cas d'interruption d'émission lors de l'occurence de cet événement particulier. Ainsi, si cet événement particulier est détecté à l'intérieur de la plage de commutation PCM, les moyens de contrôle placent alors ladite plage temporelle d'interruption PIT lors de l'occurence de cet événement particulier.

Selon un mode de mise en oeuvre de l'invention, le critère d'interruption d'émission comporte avantageusement le choix d'un groupe de plusieurs événements particuliers prédéterminés pouvant se produire au cours d'une émission, et l'ordonnancement de ces évènements particuliers selon un ordre de priorité prédéterminé en fonction de leurs impacts respectifs sur le taux d'erreur binaire en cas d'interruption d'émission lors de l'occurence de ces événements particuliers. Ainsi, l'événement particulier ayant la priorité la plus élevée conduira au taux d'erreur binaire le plus faible en cas d'interruption d'émission lors de l'occurence de cet événement particulier de priorité la plus élevée. L'événement particulier ayant la priorité la moins élevée conduira à un taux d'erreur binaire plus élevé.

Les moyens de contrôle vont alors analyser les caractéristiques de l'émission en considérant ledit ordre de priorité, de façon à détecter la présence éventuelle pendant ladite plage de commutation PCM d'un événement particulier prédéterminé dudit groupe. Et, les moyens de contrôle vont alors placer ladite plage temporelle d'interruption PIT lors de l'occurence du premier événement particulier ainsi détecté dans l'ordre de priorité.

On va maintenant se référer plus particulièrement aux figures 6 à 8, pour illustrer les événements particuliers permettant de définir ladite plage temporelle d'interruption PIT.

La figure 6 illustre schématiquement une trame d'émission TRE au sein de laquelle sont émises les informations émanant du téléphone à destination de la station de base (sens montant : "Uplink") dans un mode de fonctionnement normal. Plus précisément, d'une façon analogue à la trame de réception TRR (figure 5), la trame d'émission TRE est également subdivisée en quinze intervalles SLi. Au sein de chaque intervalle SLi sont véhiculés en parallèle le canal de données DPDCH et le canal de contrôle DPCCH. Plus précisément, les indications de contrôle véhiculées comportent un mot PLT relatif à un signal pilote, un mot TFCI correspondant à un indicateur de combinaison de format de transport, un mot FBI correspondant à une information en retour et un mot TPC correspondant à une information de puissance émise. L'homme du métier pourra également se reporter à la spécification 3G TS 25.211 V3.2.0 précitée pour plus de détails concernant la structure d'une trame d'émission TRE.

Par ailleurs, les données contenues dans le canal de données DPDCH peuvent être étalées avec un facteur d'étalement ("spreading factor") variable. Ce facteur d'étalement peut ainsi varier de 4 à 256 selon la qualité de service requise.

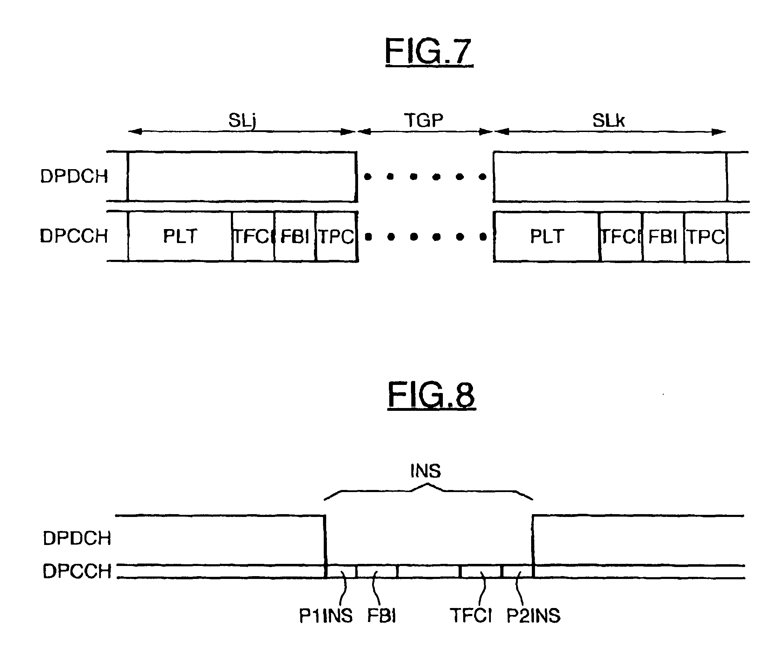

Outre le mode d'émission normal, les informations transmises peuvent l'être au sein d'un mode d'émission dit "comprimé" ("compressed mode" en langue anglaise). Dans un tel mode d'émission comprimé, il est prévu, comme illustré schématiquement sur la figure 7, des intervalles vides TGP séparant des intervalles d'émission SLj et SLk et au cours desquels aucune information n'est émise. Pour plus de détails sur le mode de transmission comprimé, l'homme du métier pourra se référer à la spécification technique 3G TS 25.212 V3.3.0 émanant du même organisme (3 GPP) que celui précédemment mentionné.

Outre le mode d'émission comprimé, le téléphone portable peut également, dans certaines circonstances, dialoguer avec la station de base dans un mode d'émission dit "hâché" ("gated mode" en langue anglaise). Dans ce mode d'émission hâché, l'émission doit être interrompue au cours de certains intervalles de chaque trame. Le nombre d'intervalles au cours desquels l'émission doit être interrompue, ainsi que leur position dans la trame, dépendent du taux de hâchage. Un tel mode d'émission hâchée est également connu de l'homme du métier. Pour plus de détails, celui-ci pourra néanmoins se référer à la spécification 3G TR 25.XXX V0.0.0, septembre 2000, de l'Organisme précédemment mentionné (3GPP).

Le téléphone portable peut également dialoguer avec la station de base dans un mode de transmission discontinu ("DTX mode" en langue anglaise). Un tel mode de transmission est également bien connu de l'homme du métier. Il se caractérise notamment, comme illustré sur la figure 8, par des intervalles de silence INS au cours desquels aucune donnée n'est émise sur le canal de donnée DPDCH en direction de la station de base. Par contre, le canal de contrôle DPCCH continue à être transmis et peut comporter notamment les mots FBI et TFCI.

Le groupe d'événements particuliers est alors constitué, par ordre de priorité décroissant :
- des intervalles vides TGP lors d'un mode d'émission comprimé,
- des intervalles au cours desquels l'émission peut être interrompue dans un mode d'émission hâché,
- des parties P1INS ou P2INS (figure 8) des intervalles de silence INS dans un mode de transmission discontinu, au cours desquelles on n'émet ni informations en retour FBI, ni indicateurs de combinaison de format de transport TFCI,
- des parties des intervalles au cours desquelles on émet des données ayant un facteur d'étalement élevé (par exemple 128 ou 256) sans émettre ni informations en retour FBI, ni indicateurs de combinaison de format de transport TFCI,
- des parties des intervalles au cours desquelles on émet des données ayant un facteur d'étalement faible sans émettre ni informations en retour FBI, ni indicateurs de combinaison de format de transport TFCI,
- des parties des intervalles au cours desquelles on émet des informations en retour FBI ou des indicateurs de combinaison de format de transport TFCI.

En d'autres termes, les moyens de contrôle vont tout d'abord détecter si la plage de commutation PCM va contenir au moins un intervalle vide TGP en mode d'émission comprimé. Si tel est le cas, les moyens de contrôle vont placer la plage d'interruption de transmission PIT dans cet intervalle vide.

Si tel n'est pas le cas, les moyens de contrôle vont détecter la présence éventuelle d'un mode d'émission hâché et vont alors placer la plage d'interruption de transmission PIT dans l'un des intervalles au cours desquels l'émission peut être interrompue.

Si tel n'est pas le cas, les moyens de contrôle vont détecter la présence éventuelle d'un mode de transmission discontinu et vont alors placer la plage d'interruption de transmission PIT au cours d'une partie P1INS ou P2INS (figure 8).

Si celà n'est pas possible, les moyens de contrôle vont alors détecter la présence éventuelle de parties d'intervalles au cours desquelles on émet les données avec un facteur d'étalement élevé, mais au cours desquelles on n'émet ni informations en retour FBI, ni indicateurs de de combinaison de format de transport TFCI. Si cette détection est positive, les moyens de contrôle vont placer la plage d'interruption de transmission au cours de ces parties d'intervalles.

Si la détection est négative, les moyens de contrôle vont essayer de détecter des parties d'intervalles au cours desquelles on émet des données ayant un facteur d'étalement faible, mais au cours desquelles on n'émet toujours pas d'informations en retour FBI, ni d'indicateurs de combinaison de format de transport TFCI. Les moyens de contrôle placeront alors la plage d'interruption de transmission PIT au cours de ces parties d'intervalles.

Et, si enfin, aucune des détections préalables n'a été positive, les moyens de contrôle vont alors placer la plage d'interruption de transmission PIT dans les parties des intervalles au cours desquelles on émet des informations en retour FBI ou des indicateurs de combinaison de format de transport TFCI.

Bien entendu, tout ce qui a été décrit ci-avant pour deux amplificateurs, s'applique si plus de deux amplificateurs sont utilisés pour autant qu'ils présentent des zones de fonctionnement se chevauchant au moins deux à deux.

## Revendications

1. Procédé de contrôle de la puissance d'émission d'un téléphone mobile cellulaire dans une plage de puissances prédéterminée, dans lequel on ajuste la puissance d'émission en fonction d'informations de puissance (TPC) régulièrement reçues par le téléphone, **caractérisé par le fait qu'**on équipe le téléphone avec au moins deux amplificateurs de puissance (PA1, PA2) individuellement sélectionnables capables de couvrir ensemble la totalité de la plage de puissance, possédant respectivement deux zones de fonctionnement optimal différentes et une zone commune de fonctionnement (ZFC), **par le fait qu'**on associe l'un des amplificateurs à chaque point de la plage de puissance en fonction d'un critère d'efficacité, **par le fait qu'**en présence d'une information de puissance reçue (TPC) correspondant à un point de la zone commune, on vérifie si cette information de puissance correspond à l'amplificateur actuellement sélectionné, et dans le cas contraire on définit une plage temporelle de commutation (PCM) s'étendant depuis l'instant de réception de ladite information de puissance sur une durée prédéterminée compatible avec les limites de ladite zone commune, on définit en fonction d'un critère prédéterminé d'interruption d'émission (CRF), les limites temporelles d'une plage temporelle d'interruption (PIT) se situant dans ladite plage de commutation, on continue, éventuellement à partir de nouvelles informations de puissance reçues, à ajuster la puissance d'émission avec l'amplificateur actuellement sélectionné jusqu'à l'occurence de ladite plage d'interruption, puis si la dernière information de puissance reçue avant l'occurence de ladite plage d'interruption ne correspond toujours pas à l'amplificateur actuellement sélectionné, on inhibe l'émission pendant ladite plage d'interruption, on sélectionne l'amplificateur de puissance associé à ladite dernière information de puissance, et on réactive l'émission avec le nouvel amplificateur sélectionné.

2. Procédé selon la revendication 1, **caractérisé par le fait que** les informations émises sont formées de fragments et sont véhiculées au sein de trames successives subdivisées chacune en un nombre prédéterminé d'intervalles (SLi), **par le fait que** la durée de la plage de commutation (PCM) est de l'ordre de quelques intervalles, par exemple 4 à 8 intervalles, et **par le fait que** la durée de la plage temporelle d'interruption (PIT) est de l'ordre de quelques fragments, par exemple 2 à 4 fragments.

3. Procédé selon la revendication 1 ou 2, **caractérisé par le fait que** le critère d'interruption d'émission (CRF) comporte le choix d'au moins un évènement particulier prédéterminé pouvant se produire au cours d'une émission et ayant un impact prédéterminé sur le taux d'erreur binaire en cas d'interruption d'émission lors de l'occurence de cet événement particulier, **par le fait qu'**on analyse les caractéristiques de l'émission de façon à détecter la présence éventuelle de cet événement particulier prédéterminé à l'intérieur de ladite plage de commutation, et **par le fait que** si cette présence est effective, on place ladite plage temporelle d'interruption (PIT) lors de l'occurence de cet événement particulier.

4. Procédé selon la revendication 3, **caractérisé par le fait que** le critère d'interruption d'émission comporte le choix d'un groupe de plusieurs évènements particuliers prédéterminés pouvant se produire au cours d'une émission, et l'ordonnancement de ces évènements particuliers selon un ordre de priorité prédéterminé en fonction de leur impacts respectifs sur le taux d'erreur binaire en cas d'interruption d'émission lors de l'occurence de ces évènements particuliers,
**par le fait qu'**on analyse les caractéristiques de l'émission en considérant ledit ordre de priorité de façon à détecter la présence éventuelle pendant ladite plage de commutation (PCM), d'un événement particulier prédéterminé dudit groupe, et **par le fait qu'**on place ladite plage temporelle d'interruption (PIT) lors de l'occurence du premier événement particulier ainsi détecté dans l'ordre de priorité.

5. Procédé selon la revendication 4, **caractérisé par le fait que** les informations émises comportent des données et des indications de contrôle, et sont véhiculées au sein de trames successives subdivisées chacune en un nombre prédéterminé d'intervalles, **par le fait que** les indications de contrôle comportent des informations en retour (FBI) et des indicateurs de combinaison de format de transport (TFCI), et **par le fait que** le groupe d'événements particuliers est constitué, par ordre de priorité décroissant :
- des intervalles vides (TPG) lors d'un mode d'émission comprimé,
- des intervalles au cours desquels l'émission doit être interrompue dans un mode d'émission hâché,
- des parties (P1INS, P2INS) des intervalles de silence (INS) dans un mode de transmission discontinu, au cours desquelles on n'émet ni informations en retour (FBI) ni indicateurs de combinaison de format de transport (TFCI),
- des parties des intervalles au cours desquelles on émet des données ayant un facteur d'étalement élevé sans émettre ni informations en retour (FBI) ni indicateurs de combinaison de format de transport (TFCI),
- des parties des intervalles au cours desquelles on émet des données ayant un facteur d'étalement faible sans émettre ni informations en retour (FBI) ni indicateurs de combinaison de format de transport (TFCI),
- des parties des intervalles au cours desquelles on émet des informations en retour (FBI) ou des indicateurs de combinaison de format de transport (TFCI).

6. Téléphone mobile cellulaire, comprenant une chaîne de réception, une chaîne d'émission, un étage d'amplification de puissance connecté entre la chaîne d'émission et l'antenne, et un étage de traitement apte à ajuster la puissance de sortie de l'étage d'amplification en fonction d'informations de puissance régulièrement reçues par la chaîne de réception, **caractérisé par le fait que** l'étage d'amplification de puissance comporte au moins deux amplificateurs de puissance (PA1, PA2) individuellement sélectionnables capables de couvrir ensemble la totalité de la plage de puissance, possédant respectivement deux zones de fonctionnement optimal différentes et une zone commune de fonctionnement, et des moyens de sélection (MWS) aptes en réponse à une information de sélection, à relier la sortie de la chaîne d'émission à l'entrée de l'amplificateur de puissance correspondant à ladite information de sélection,
et **par le fait que** l'étage de traitement (ETNE) comporte :
- une table de correspondance (MM) associant l'un des amplificateurs à chaque point de la plage de puissance en fonction d'un critère d'efficacité,
- des moyens de contrôle (MCT) aptes en présence d'une information de puissance reçue correspondant à un point de la zone commune, à vérifier si cette information de puissance correspond à l'amplificateur actuellement sélectionné, et dans le cas contraire à définir une plage temporelle de commutation (PCM) s'étendant depuis l'instant de réception de ladite information de puissance sur une durée prédéterminée compatible avec les limites de ladite zone commune, et à définir en fonction d'un critère prédéterminé d'interruption d'émission, les limites temporelles d'une plage temporelle (PIT) d'interruption se situant dans ladite plage de commutation, et
- des moyens de commande (MCD) aptes à autoriser la poursuite, éventuellement à partir de nouvelles informations de puissance reçues, de l'ajustement de la puissance d'émission avec l'amplificateur actuellement sélectionné jusqu'à l'occurence de ladite plage d'interruption, puis si la dernière information de puissance reçue avant l'occurence de ladite plage d'interruption ne correspond toujours pas à l'amplificateur actuellement sélectionné, à inhiber l'émission pendant ladite plage d'interruption, à délivrer aux moyens de sélection l'information de sélection correspondant à l'amplificateur de puissance associé à ladite dernière information de puissance, et à réactiver l'émission avec le nouvel amplificateur sélectionné.

7. Téléphone selon la revendication 6, **caractérisé par le fait que** les informations émises sont formées de fragments et sont véhiculées au sein de trames successives subdivisées chacune en un nombre prédéterminé d'intervalles, **par le fait que** la durée de la plage de commutation (PCM) est de l'ordre de quelques intervalles, par exemple 4 à 8 intervalles, et **par le fait que** la durée de la plage temporelle d'interruption (PIT) est de l'ordre de quelques fragments, par exemple 2 à 4 fragments.

8. Téléphone selon la revendication 6 ou 7, **caractérisé par le fait que** le critère d'interruption d'émission (CRF) comporte le choix d'au moins un évènement particulier prédéterminé pouvant se produire au cours d'une émission et ayant un impact prédéterminé sur le taux d'erreur binaire en cas d'interruption d'émission lors de l'occurence de cet événement particulier, **par le fait que** les moyens de contrôle analysent les caractéristiques de l'émission de façon à détecter la présence éventuelle de cet évènement particulier prédéterminé à l'intérieur de ladite plage de commutation, et **par le fait que** si cette présence est effective, les moyens de contrôlent placent ladite plage temporelle d'interruption lors de l'occurence de cet événement particulier.

9. Téléphone selon la revendication 8, **caractérisé par le fait que** le critère d'interruption d'émission comporte le choix d'un groupe de plusieurs événements particuliers prédéterminés pouvant se produire au cours d'une émission, et l'ordonnancement de ces évènements particuliers selon un ordre de priorité prédéterminé en fonction de leur impacts respectifs sur le taux d'erreur binaire en cas d'interruption d'émission lors de l'occurence de ces évènements particuliers
**par le fait que** les moyens de contrôle analysent les caractéristiques de l'émission en considérant ledit ordre de priorité de façon à détecter la présence éventuelle pendant ladite plage de commutation d'un évènement particulier prédéterminé dudit groupe, et **par le fait que** les moyens de contrôle placent ladite plage temporelle d'interruption lors de l'occurence du premier évènement particulier ainsi détecté dans l'ordre de priorité.

10. Téléphone selon la revendication 9, **caractérisé par le fait que** les informations émises comportent des données et des indications de contrôle, et sont véhiculées au sein de trames successives subdivisées chacune en un nombre prédéterminé d'intervalles, **par le fait que** les indications de contrôle comportent des informations en retour (FBI) et des indicateurs de combinaison de format de transport (TFCI), et **par le fait que** le groupe d'évènements particuliers est constitué, par ordre de priorité décroissant :
- des intervalles vides lors d'un mode d'émission comprimé,
- des intervalles au cours desquels l'émission doit être interrompue dans un mode d'émission hâché,
- des parties des intervalles de silence dans un mode de transmission discontinu, au cours desquelles on n'émet ni informations en retour (FBI) ni indicateurs de combinaison de format de transport (TFCI),
- des parties des intervalles au cours desquelles on émet des données ayant un facteur d'étalement élevé sans émettre ni informations en retour (FBI) ni indicateurs de combinaison de format de transport (TFCI),
- des parties des intervalles au cours desquelles on émet des données ayant un facteur d'étalement faible sans émettre ni informations en retour (FBI) ni indicateurs de combinaison de format de transport (TFCI),
- des parties des intervalles au cours desquelles on émet des informations en retour (FBI) ou des indicateurs de combinaison de format de transport (TFCI).

## Claims

1. Method of controlling the transmission power of a cellular mobile telephone in a predetermined power span, in which the transmission power is adjusted as a function of power information (TPC) received regularly by the telephone, **characterized in that** the telephone is equipped with at least two individually selectable power amplifiers (PA1, PA2) that are together capable of covering the entire power span and possess respectively, two different optimal operating zones and a common operating zone (ZFC), **in that** one of the amplifiers is associated with each point of the power span as a function of an effectiveness criterion, and **in that**, in the presence of a received power information (TPC) corresponding to a point of the common zone, a check is made to verify whether this power information corresponds to the amplifier currently selected and, in the converse case, a temporal switching span (PCM) is defined that extends from the instant of receipt of the said power information over a predetermined duration compatible with the limits of the said common zone, the temporal limits of a temporal interruption span (PIT) lying in the said switching span are defined as a function of a predetermined transmission interruption criterion (CRF), the transmission power continues to be adjusted, possibly on the basis of new power information received, with the amplifier currently selected, until the occurrence of the said interruption span, then, if the last power information received before the occurrence of the said interruption span still does not correspond to the amplifier currently selected, transmission is disabled during the said interruption span, the power amplifier associated with the said last power information is selected, and transmission is reactivated with the new selected amplifier.

2. Method according to Claim 1, **characterized in that** the transmitted information are formed of fragments and are conveyed within successive frames each subdivided into a predetermined number of intervals (SLi), **in that** the duration of the switching span (PCM) is of the order of a few intervals, for example 4 to 8 intervals, and **in that** the duration of the temporal interruption span (PIT) is of the order of a few fragments, for example 2 to 4 fragments.

3. Method according to Claim 1 or 2, **characterized in that** the transmission interruption criterion (CRF) comprises the choice of at least one predetermined particular event that may occur in the course of a transmission and have a predetermined impact on the binary error rate in the case of an interruption in transmission during the occurrence of that particular event, **in that** the characteristics of the transmission are analysed so as to detect the possible presence of that predetermined particular event within the said switching span, and **in that**, if this presence is real, the said temporal interruption span (PIT) is placed during the occurrence of that particular event.

4. Method according to Claim 3, **characterized in that** the transmission interruption criterion comprises the choice of a group of several predetermined particular events that may occur in the course of a transmission and the ordering of those particular events according to an order of priority that is predetermined as a function of their respective impacts on the binary error rate in the case of an interruption in transmission during the occurrence of those particular events,
**in that** the characteristics of the transmission are analysed by considering the said order of priority so as to detect the possible presence, during the said switching span (PCM), of a predetermined particular event of the said group, and **in that** the said temporal interruption span (PIT) is placed during the occurrence of the first particular event thus detected in the order of priority.

5. Method according to Claim 4, **characterized in that** the transmitted information comprise data and control indications and are conveyed within successive frames each subdivided into a predetermined number of intervals, **in that** the control indications comprise feedback information (FBI) and transport format combination indicators (TFCI), and **in that** the group of particular events consists, in decreasing order of priority:
- of the empty intervals (TPG) during a compressed transmission mode,
- of the intervals in the course of which transmission has to be interrupted in a gated transmission mode,
- of the parts (P1INS, P2INS) of the silence intervals (INS), in a discontinuous transmission mode, in the course of which neither feedback information (FBI) nor transport format combination indicators (TFCI) are transmitted,
- of the parts of the intervals in the course of which data that have a high spreading factor are transmitted without transmitting either feedback information (FBI) or transport format combination indicators (TFCI),
- of the parts of the intervals in the course of which data that have a low spreading factor are transmitted without transmitting either feedback information (FBI) or transport format combination indicators (TFCI),
- of the parts of the intervals in the course of which feedback information (FBI) or transport format combination indicators (TFCI) are transmitted.

6. Cellular mobile telephone, comprising a reception chain, a transmission chain, a power amplification stage connected between the transmission chain and the antenna, and a processing stage capable of adjusting the output power of the amplification stage as a function of power information received regularly by the reception chain, **characterized in that** the power amplification stage comprises at least two individually selectable power amplifiers (PA1, PA2) that are together capable of covering the entire power span and possess respectively, two different optimal operating zones and a common operating zone, and selection means (MWS) capable, in response to a selection information, of linking the output of the transmission chain to the input of the power amplifier corresponding to the said selection information,
and **in that** the processing stage (ETNE) comprises:
- a lookup table (MM) associating one of the amplifiers with each point of the power span as a function of an effectiveness criterion,
- control means (MCT) capable, in the presence of a received power information corresponding to a point of the common zone, of verifying whether this power information corresponds to the amplifier currently selected and, in the converse case, of defining a temporal switching span (PCM) that extends from the instant of receipt of the said power information over a predetermined duration compatible with the limits of the said common zone, and of defining, as a function of a predetermined transmission interruption criterion, the temporal limits of a temporal interruption span (PIT) lying in the said switching span, and
- drive means (MCD) capable of authorizing the continuation, possibly on the basis of new power information received, of the adjustment of the transmission power with the amplifier currently selected, until the occurrence of the said interruption span, then, if the last power information received before the occurrence of the said interruption span still does not correspond to the amplifier currently selected, of disabling transmission during the said interruption span, of delivering the selection information corresponding to the power amplifier associated with the said last power information to the selection means, and of reactivating transmission with the new selected amplifier.

7. Telephone according to Claim 6, **characterized in that** the transmitted information are formed of fragments and are conveyed within successive frames each subdivided into a predetermined number of intervals, **in that** the duration of the switching span (PCM) is of the order of a few intervals, for example 4 to 8 intervals, and **in that** the duration of the temporal interruption span (PIT) is of the order of a few fragments, for example 2 to 4 fragments.

8. Telephone according to Claim 6 or 7, **characterized in that** the transmission interruption criterion (CRF) comprises the choice of at least one predetermined particular event that may occur in the course of a transmission and have a predetermined impact on the binary error rate in the case of an interruption in transmission during the occurrence of that particular event, **in that** the control means analyse the characteristics of the transmission so as to detect the possible presence of that predetermined particular event within the said switching span, and **in that**, if this presence is real, the control means place the said temporal interruption span during the occurrence of that particular event.

9. Telephone according to Claim 8, **characterized in that** the transmission interruption criterion comprises the choice of a group of several predetermined particular events that may occur in the course of a transmission and the ordering of those particular events according to an order of priority that is predetermined as a function of their respective impacts on the binary error rate in the case of an interruption in transmission during the occurrence of those particular events
**in that** the control means analyse the characteristics of the transmission by considering the said order of priority so as to detect the possible presence, during the said switching span, of a predetermined particular event of the said group, and **in that** the control means place the said temporal interruption span during the occurrence of the first particular event thus detected in the order of priority.

10. Telephone according to Claim 9, **characterized in that** the transmitted information comprise data and control indications and are conveyed within successive frames each subdivided into a predetermined number of intervals, **in that** the control indications comprise feedback information (FBI) and transport format combination indicators (TFCI), and **in that** the group of particular events consists, in decreasing order of priority:
- of the empty intervals during a compressed transmission mode,
- of the intervals in the course of which transmission has to be interrupted in a gated transmission mode,
- of the parts of the silence intervals, in a discontinuous transmission mode, in the course of which neither feedback information (FBI) nor transport format combination indicators (TFCI) are transmitted,
- of the parts of the intervals in the course of which data that have a high spreading factor are transmitted without transmitting either feedback information (FBI) or transport format combination indicators (TFCI),
- of the parts of the intervals in the course of which data that have a low spreading factor are transmitted without transmitting either feedback information (FBI) or transport format combination indicators (TFCI),
- of the parts of the intervals in the course of which feedback information (FBI) or transport format combination indicators (TFCI) are transmitted.

## Patentansprüche

1. Verfahren zur Steuerung der Sendeleistung eines zellularen Mobiltelefons in einem vorgegebenen Leistungsbereich, wobei die Sendeleistung in Abhängigkeit von Leistungsinformationen (TPC), die regelmäßig von dem Telefon empfangen werden, angepaßt wird,
**dadurch gekennzeichnet, daß**
das Telefon mit mindestens zwei separat auswählbaren Leistungsverstärkern (PA1, PA2) ausgestattet wird, die in der Lage sind, zusammen den gesamten Leistungsbereich abzudecken, und jeweils zwei unterschiedliche optimale Arbeitszonen und eine gemeinsame Arbeitszone (ZFC) aufweisen,
**dadurch**, daß in Abhängigkeit eines Wirksamkeitskriteriums jedem Punkt des Leistungsbereichs einer der Verstärker zugeordnet wird,
**dadurch**, daß
in Anwesenheit einer empfangenen Leistungsinformation (TPC), die einem Punkt der gemeinsamen Zone entspricht, geprüft wird, ob diese Leistungsinformation dem aktuell ausgewählten Verstärker entspricht, und in dem gegenteiligen Fall ein Umschalt-Zeitbereich (PCM) definiert wird, der sich von dem Zeitpunkt des Empfangs dieser Leistungsinformation an über eine vorgegebene Zeitdauer erstreckt, die mit den Grenzen der gemeinsamen Zone vereinbar ist,
in Abhängigkeit eines vorgegebenen Sendeunterbrechungskriteriums (CRF) die Zeitgrenzen eines in dem Umschaltbereich liegenden Unterbrechung-Zeitbereichs (PIT) definiert werden,
bis zum Auftreten des Unterbrechungsbereichs fortgefahren wird, gegebenenfalls ausgehend von neuen empfangenen Leistungsinformationen die Sendeleistung mit dem aktuell ausgewählten Verstärker anzupassen,
dann, falls die letzte vor dem Auftreten des Unterbrechungsbereichs empfangene Leistungsinformation immer noch nicht dem aktuell ausgewählten Verstärker entspricht, das Senden während des Unterbrechungsbereichs unterdrückt wird, der Leistungsverstärker, der der Leistungsinformation zugeordnet ist, ausgewählt wird und das Senden mit dem neuen ausgewählten Verstärker reaktiviert wird.

2. Verfahren nach Anspruch 1, **dadurch gekennzeichnet, daß** die gesendeten Informationen aus Fragmenten gebildet sind und in aufeinanderfolgenden Rahmen übertragen werden, die jeweils in eine vorgegebene Anzahl von Intervallen (SLi) unterteilt sind,
**dadurch**, daß die Dauer des Umschaltbereichs (PCM) in der Größenordnung von einigen Intervallen, zum Beispiel 4 bis 8 Intervallen, ist, und
**dadurch**, daß die Dauer des Unterbrechung-Zeitbereichs (PIT) in der Größenordnung von einigen Fragmenten, zum Beispiel 2 bis 4 Fragmenten, ist.

3. Verfahren nach Anspruch 1 oder 2, **dadurch gekennzeichnet, daß** das Sendeunterbrechungskriterium (CRF) die Auswahl mindestens eines speziellen vorgegebenen Ereignisses aufweist, das im Verlaufe eines Sendens auftreten kann, und mit einem vorgegebenen Einfluß auf die Bitfehlerrate im Falle einer Sendeunterbrechung beim Auftreten dieses speziellen Ereignisses,
**dadurch**, daß die Sendeeigenschaften analysiert werden, um die eventuelle Anwesenheit dieses speziellen vorgegebenen Ereignisses innerhalb des Umschaltbereichs zu detektieren, und
**dadurch**, daß, falls diese Anwesenheit wirksam ist, der Unterbrechung-Zeitbereich (PIT) beim Auftreten dieses speziellen Ereignisses gesetzt wird.

4. Verfahren nach Anspruch 3, **dadurch gekennzeichnet, daß**
das Sendeunterbrechungskriterium aufweist: die Auswahl einer Gruppe von mehreren speziellen vorgegebenen Ereignissen, die während eines Sendens auftreten können, und die Anordnung dieser speziellen Ereignisse gemäß einer vorgegebenen Prioritätsreihenfolge in Abhängigkeit ihres jeweiligen Einflusses auf die Bitfehlerrate im Falle einer Sendeunterbrechung beim Auftreten dieser speziellen Ereignisse,
**dadurch**, daß die Sendeeigenschaften unter Berücksichtigung der Prioritätsreihenfolge analysiert werden, um so die während des Umschaltbereichs (PCM) eventuelle Anwesenheit eines speziellen vorgegebenen Ereignisses der Gruppe zu detektieren, und
**dadurch**, daß der Unterbrechung-Zeitbereich (PIT) beim Auftreten des auf diese Weise in der Prioritätsreihenfolge detektierten ersten speziellen Ereignisses gesetzt wird.

5. Verfahren nach Anspruch 4, **dadurch gekennzeichnet, daß**
die gesendeten Informationen Daten und Steuerzeichen aufweisen und in aufeinanderfolgenden Rahmen übertragen werden, die jeweils in eine vorgegebene Anzahl von Intervallen unterteilt sind,
**dadurch**, daß die Steuerzeichen Rückinformationen (FBI) und Transportformatkombinationszeichen (TFCI) aufweisen, und
**dadurch**, daß die Gruppe der speziellen Ereignisse in abnehmender Prioritätsreihenfolge besteht aus:
- Leerintervallen (TPG) bei einem komprimierten Sendemodus,
- Intervallen, im Verlaufe derer das Senden in einem zerhackten Sendemodus unterbrochen werden muss,
- Teilen (P1INS, P2INS) von Stilleintervallen (INS) in einem diskontinuierlichen Übertragungsmodus, im Verlaufe derer weder Rückinformationen (FBI) noch Transportformatkombinationszeichen (TFCI) gesendet werden,
- Teilen von Intervallen, im Verlaufe derer Daten gesendet werden, die einen erhöhten Spreizungsfaktor haben, wobei weder Rückinformationen (FBI) noch Transportformatkombinationszeichen (TFCI) gesendet werden,
- Teilen von Intervallen, im Verlaufe derer Daten gesendet werden, die einen geringen Spreizungsfaktor haben, wobei weder Rückinformationen (FBI) noch Transportformatkombinationszeichen (TFCI) gesendet werden,
- Teilen von Intervallen, im Verlaufe derer Rückinformationen (FBI) oder Transportformatkombinationszeichen (TFCI) gesendet werden.

6. Zellulares Mobiltelefon, aufweisend eine Empfangskette, eine Sendekette, eine zwischen der Sendekette und der Antenne angeordnete Leistungsverstärkungsstufe, und eine Verarbeitungsstufe, die in der Lage ist, die Ausgangsleistung der Verstärkungsstufe in Abhängigkeit von Leistungsinformationen, die regelmäßig von der Empfangskette empfangenen werden, anzupassen,
**dadurch gekennzeichnet, daß**
die Leistungsverstärkungsstufe aufweist: mindestens zwei separat auswählbare Leistungsverstärker (PA1, PA2), die in der Lage sind, zusammen den gesamten Leistungsbereich abzudecken und jeweils zwei unterschiedliche optimale Arbeitszonen und eine gemeinsame Arbeitszone aufweisen, und Auswahleinrichtungen (MWS), die in der Lage sind, als Antwort auf eine Auswahlinformation den Ausgang der Sendekette mit dem Eingang desjenigen Leistungsverstärkers zu verbinden, der der Auswahlinformation entspricht und **dadurch**, daß die Verarbeitungsstufe (ET-NE) aufweist:
- eine Korrespondenztabelle (MM), die in Abhängigkeit eines Wirksamkeitskriteriums jedem Punkt des Leistungsbereichs einen Verstärker zuordnet,
- Steuereinrichtungen (MCT), die in der Lage sind, in Anwesenheit einer empfangenen Leistungsinformation, die einem Punkt der gemeinsamen Zone entspricht, nachzuprüfen, ob diese Leistungsinformation dem aktuell ausgewählten Verstärker entspricht, und im gegenteiligen Fall einen Umschalt-Zeitbereich (PCM) zu definieren, der sich vom Zeitpunkt des Empfangs der Leistungsinformation an über eine vorgegebene Zeitdauer erstreckt, die mit den Grenzen der gemeinsamen Zone vereinbar ist, und in Abhängigkeit eines vorgegebenen Sendeunterbrechungskriterium die Zeitgrenzen eines in dem Umschaltbereich liegenden Unterbrechung-Zeitbereichs (PIT) zu definieren, und
- Regelungseinrichtungen (MCD), die in der Lage sind, eventuell ausgehend von neuen empfangenen Leistungsinformationen die Fortführung des Anpassens der Sendeleistung mit dem aktuell ausgewählten Verstärkers bis zum Auftreten des Unterbrechungsbereichs zu erlauben, dann, falls die letzte vor dem Auftreten des Unterbrechungsbereichs empfangene Leistungsinformation immer noch nicht dem aktuell ausgewählten Verstärker entspricht, das Senden während des Unterbrechungsbereichs zu unterdrücken, die Auswahlinformation, die dem Leistungsverstärker entspricht, der der letzten Leistungsinformation zugeordnet ist, an die Auswahleinrichtungen auszugeben und das Senden mit dem neuen ausgewählten Verstärker zu reaktivieren.

7. Telefon nach Anspruch 6, **dadurch gekennzeichnet, daß** die gesendeten Informationen aus Fragmenten gebildet sind und in aufeinanderfolgenden Rahmen übertragen werden, die jeweils in eine vorgegebene Anzahl von Intervallen unterteilt sind,
**dadurch**, daß die Dauer des Umschaltbereichs (PCM) in der Größenordnung von einigen Intervallen, zum Beispiel 4 bis 8 Intervallen, ist, und
**dadurch**, daß die Dauer des Unterbrechung-Zeitbereichs (PIT) in der Größenordnung von einigen Fragmenten, zum Beispiel 2 bis 4 Fragmenten, ist.

8. Telefon nach Anspruch 6 oder 7, **dadurch gekennzeichnet, daß**
das Sendeunterbrechungskriterium (CRF) die Auswahl mindestens eines speziellen vorgegebenen Ereignisses aufweist, das im Verlaufe eines Sendens auftreten kann, und mit einem vorgegebenen Einfluß auf die Bitfehlerrate im Falle einer Sendeunterbrechung beim Auftreten dieses speziellen Ereignisses,
**dadurch**, daß die Steuereinrichtungen die Sendeeigenschaften analysieren, um die eventuelle Anwesenheit dieses speziellen vorgegebenen Ereignisses innerhalb des Umschaltbereichs zu detektieren, und
**dadurch**, daß, falls diese Anwesenheit wirksam ist, die Steuereinrichtungen den Unterbrechung-Zeitbereich (PIT) beim Auftreten dieses speziellen Ereignisses setzen.

9. Telefon nach Anspruch 8, **dadurch gekennzeichnet, daß**
das Sendeunterbrechungskriterium aufweist: die Auswahl einer Gruppe von mehreren speziellen vorgegebenen Ereignissen, die im Verlaufe eines Sendens auftreten können, und die Anordnung dieser speziellen Ereignisse nach einer vorgegebenen Prioritätsreihenfolge in Abhängigkeit ihres jeweiligen Einflusses auf die Bitfehlerrate im Falle einer Sendeunterbrechung beim Auftreten dieser speziellen Ereignisse,
**dadurch**, daß die Steuereinrichtungen die Sendeeigenschaften unter Berücksichtigung der Prioritätsreihenfolge analysieren, um so die während des Umschaltbereichs (PCM) eventuelle Anwesenheit eines speziellen vorgegebenen Ereignisses der Gruppe zu detektieren, und
**dadurch**, daß die Steuereinrichtungen den Unterbrechung-Zeitbereich (PIT) beim Auftreten des auf diese Weise in der Prioritätsreihenfolge detektierten ersten speziellen Ereignisses setzen.

10. Telefon nach Anspruch 9, **dadurch gekennzeichnet, daß**
die gesendeten Informationen Daten und Steuerzeichen aufweisen und in aufeinanderfolgenden Rahmen übertragen werden, die jeweils in eine vorgegebene Anzahl von Intervallen unterteilt sind,
**dadurch**, daß die Steuerzeichen Rückinformationen (FBI) und Transportformatkombinationszeichen (TFCI) aufweisen, und
**dadurch**, daß die Gruppe der speziellen Ereignisse in abnehmender Prioritätsreihenfolge besteht aus:
- Leerintervallen bei einem komprimierten Sendemodus,
- Intervallen, im Verlaufe derer das Senden in einem zerhackten Sendemodus unterbrochen werden muss,
- Teilen von Stilleintervallen in einem diskontinuierlichen Übertragungsmodus, im Verlaufe derer weder Rückinformationen (FBI) noch Transportformatkombinationszeichen (TFCI) gesendet werden,
- Teilen von Intervallen, im Verlaufe derer Daten gesendet werden, die einen erhöhten Spreizungsfaktor haben, wobei weder Rückinformationen (FBI) noch Transportformatkombinationszeichen (TFCI) gesendet werden,
- Teilen von Intervallen, im Verlaufe derer Daten gesendet werden, die einen geringen Spreizungsfaktor haben, wobei weder Rückinformationen (FBI) noch Transportformatkombinationszeichen (TFCI) gesendet werden,
- Teilen von Intervallen, im Verlaufe derer Rückinformationen (FBI) oder Transportformatkombinationszeichen (TFCI) gesendet werden.
